# EUROPEAN PATENT APPLICATION

(11) **EP 1 790 957 A2**
(43) Date of publication of application: **30.05.2007**
(21) Application number: 06123703.8
(22) Date of filing: 08.11.2006
(51) Int. Cl.: G01F 11/02, G01F 3/16

(54) **Fluid measurement and dosing device**

(30) Priority: 25.11.2005 IT MI20052259
(71) Applicant: Sunbird Investments Limited, St. Helier, Jersey, Channel Islands JE4 9ZH (GB)
(72) Inventor: Divisi, Walter, Egham, Surrey TW20 0HJ (GB)
(74) Representative: Pesce, Michele

(57) **Abstract**

The fluid measurement/division device (1) comprises a plurality of cylinders (2, 3) in which a first and a second piston (4, 5) are slidably inserted to operate alternately as a dosing piston or as a piloting piston for the dosing piston. The first and said second piston (4, 5) present reduced diameter regions which, together with the surface of the cylinders (2, 3), define at least three constant volume distribution chambers (6a, 7a, 8a, 6b, 7b, 8b) and two variable volume pumping chambers (9a, 10a, 9b, 10b). The device (1) comprises a plurality of conduits connecting said cylinders (2, 3) together and to the outside, to allow or prohibit hydraulic connection in relation to the position assumed by the first and by the second piston (4, 5), such that when the first piston (4) is in the dosing stage and, by translating, it dispenses fluid and passes to the piloting stage, the second piston (5) passes from the piloting stage to the dosing stage via a neutral stage.

## Description

The present invention relates to a fluid measurement/division device and process.

In particular, the device and process of the present invention are usable to divide a fluid flow rate, for example to obtain from an inlet flow two or more outlet flows of equal flow rate, with possible measurement of the flow rate. If only one flow is obtained at the device outlet, the device is used (and operates) as a flow rate measurement device, i.e. it exactly measures the delivered flow rate without effecting any flow rate division.

Devices of the indicated type are currently formed with at least three cylinders, in each of which a piston is slidably inserted.

Each piston is provided with two reduced diameter regions which define two distribution chambers inside the cylinder.

Each cylinder also defines two pumping chambers at its ends.

The three cylinders are connected together by a plurality of conduits, such that the conduits alternately connect together one or other of the chambers defined between each cylinder and the respective piston.

During operation of the traditional device, each of the pistons is in a different operating stage.

In particular, while a first piston is in a dosing stage (and dispenses a predetermined quantity of fluid contained in a pumping chamber, forcing it to leave the device), a second piston is in a piloting stage (and causes the fluid to operate the dosing piston).

Finally a third piston is in a neutral stage, in which it does not act on the fluid (delivering it to the outside) and is not operated by the fluid; during this stage the piston contained in the cylinder in the neutral stage moves from the piloting position to the dosing position; if this stage were not present, the device would lock because the liquid would not be able to continuously operate the pistons such that they alternate their function by passing from the piloting stage to the dosing stage.

However, the described devices of traditional type are large and heavy because of the minimum number of cylinder/piston pairs required for their operation; in this respect, at least three cylinder/piston pairs are required, each of which effects one of the described stages during operation, while the other cylinder/piston pairs effect the others.

The traditional devices are also costly to construct because of the large number of components required.

The technical aim of the present invention is therefore to provide a fluid measurement/division device and process by which the stated technical drawbacks of the known art are eliminated.

Within the scope of this technical aim, an object of the invention is to provide a device of small size and reduced weight; this advantageously enables devices to be constructed which can be handled and installed easily, even in difficultly accessible or narrow positions.

Another object of the invention is to provide a device and process which are economical to implement, in particular compared with traditional devices.
The technical aim, together with these and other objects are attained according to the present invention by a fluid measurement/division device and process in accordance with the accompanying claims.

Advantageously, the device and process of the invention are also usable when the fluid which they are required to handle operates at high or very high pressure (up to and beyond 2000 bar).

Further characteristics and advantages of the invention will be more apparent from the ensuing description of a preferred but non-exclusive embodiment of the fluid measurement/division device and process according to the invention, illustrated by way of non-limiting example in the accompanying drawings, in which:
Figures 1-4 show a schematic view of the device in four different successive operating stages;
Figure 5 shows a schematic view of a part of an end of a cylinder and of a piston slidable therein, in an embodiment of the device particularly suitable for use with devices operating at high pressure;
Figure 6 shows a schematic upper view of the device of the invention in a different embodiment;
Figure 7 shows a schematic section through line VII-VII of Figure 6;
Figure 8 shows a lateral side view of the device of Figure 6;
Figure 9 shows a schematic section of the device of Figure 6; and
Figure 10 shows a particular of one way valves mounted on the outlet conduits of the device of figure 6.

With reference to said Figures, these show a fluid measurement/division device indicated overall by the reference numeral 1.

The device 1 comprises two cylinders 2, 3 in which a first and a second piston 4, 5 are slidably inserted.

Each of the two pistons 4, 5 operates alternately as a fluid dosing piston or as a piloting piston for the dosing piston.

The dosing piston dispenses fluid to the outside (by its movement), while the piloting piston defines the path for the fluid, which is directed towards the dosing piston to control its movement.

Advantageously, the first and second piston 4, 5 present reduced diameter regions which, together with the surface of the cylinders 2, 3, define three constant volume distribution chambers 6a, 7a, 8a and two variable volume pumping chambers 9a, 10a for the first cylinder 2, and three constant volume distribution chambers 6b, 7b, 8b and two variable volume pumping chambers 9b, 10b for the second cylinder 3.

The device 1 comprises a plurality of conduits connecting the cylinders 2, 3 together and to the outside (for example to interact with a machine), to allow or prohibit hydraulic connection in relation to the position assumed by the first and second piston 4, 5.

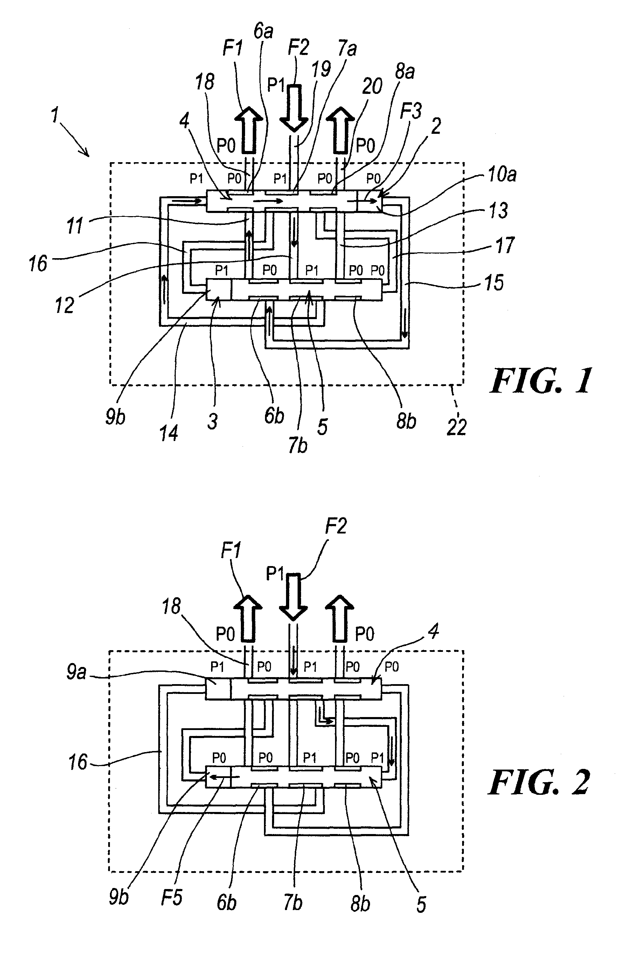

Advantageously, with reference for example to Figure 1, when the first piston 4 is in the dosing stage and translates to dispense fluid (arrow F1) to pass to the piloting stage, the second piston 5 is in the piloting stage and passes to the dosing stage by passing through a neutral stage.

The neutral stage enables operation of the device of the invention to be continuous in that, if it did not exist, the piloting piston would be unable to pass to the dosing stage and the device would lock.

As shown in the accompanying figures, the connection conduits comprise: a first conduit 11 to connect a first distribution chamber 6a of the first cylinder 2 to a first distribution chamber 6b of the second cylinder 3, a second conduit 12 to connect a second distribution chamber 7a of the first cylinder 2 to a second distribution chamber 7b of the second cylinder 3, and a third conduit 13 to connect a third distribution chamber 8a of the first cylinder 2 to a third distribution chamber 8b of the second cylinder 3.

The connection conduits also comprise a fourth conduit 14 to connect the first pumping chamber 9a of the first cylinder 2 to the second distribution chamber 7b or to the third distribution chamber 8b of the second cylinder 3, a fifth conduit 15 to connect the second pumping chamber 10a of the first cylinder 2 to the first distribution chamber 6b or to the second distribution chamber 7b of the second cylinder 3.

A sixth conduit 16 is provided to connect the first distribution chamber 6a or the second distribution chamber 7a of the first cylinder 2 to the first pumping chamber 9b of the second cylinder 3, and a seventh conduit 17 to connect the second distribution chamber 7a or the third distribution chamber 8a of the first cylinder 2 to the second pumping chamber 10b of the second cylinder 3.

Finally, an eighth conduit 18 is provided to connect the first distribution chamber 6a of the first cylinder 2 to the outside, a ninth conduit 19 to connect the second distribution chamber 7a of the first cylinder 2 to the outside, and a tenth conduit 20 to connect the third distribution chamber 8a of the first cylinder 2 to the outside.

The device 1 suitably comprises a block 22 defining the first and second cylinder 2, 3 and also at least the first, second and third connection conduit 11, 12, 13.

In a preferred embodiment, shown in Figures 1-4, the block 22 also defines the fourth, fifth, sixth, seventh, eighth, ninth and tenth connection conduit 14-20.

The device advantageously defines a module provided with two cylinders. Several modules can be connected together, but in all cases the cylinders are operationally connected together in pairs.

The operation of the fluid measurement/division device of the invention is apparent from that described and illustrated, and is substantially as follows.

The fluid enters through the conduit 19 as indicated by the arrow F2 and is directed into the second chamber 7b of the second cylinder (which is in the piloting stage).

In the second cylinder 3 the second piston 5 enables the fluid to transit through the fourth conduit 14 to enter the first pumping chamber 9a of the first cylinder 2.

This causes the first piston 4 to translate as indicated by the arrow F3; this translation causes the fluid contained in the second pumping chamber 10a of the first cylinder to pass through the fifth conduit 15, to pass through the first chamber 6b of the second cylinder and through the first conduit 11, to be dispensed to the outside through the eighth conduit 18.
The device then assumes the configuration of Figure 2.
In this configuration the first cylinder 2 acts as the piloting cylinder, as the fluid enters the first conduit 2 (arrow F2) and is directed into the second pumping chamber 10b of the second cylinder 3 (which operates as a dosing cylinder).

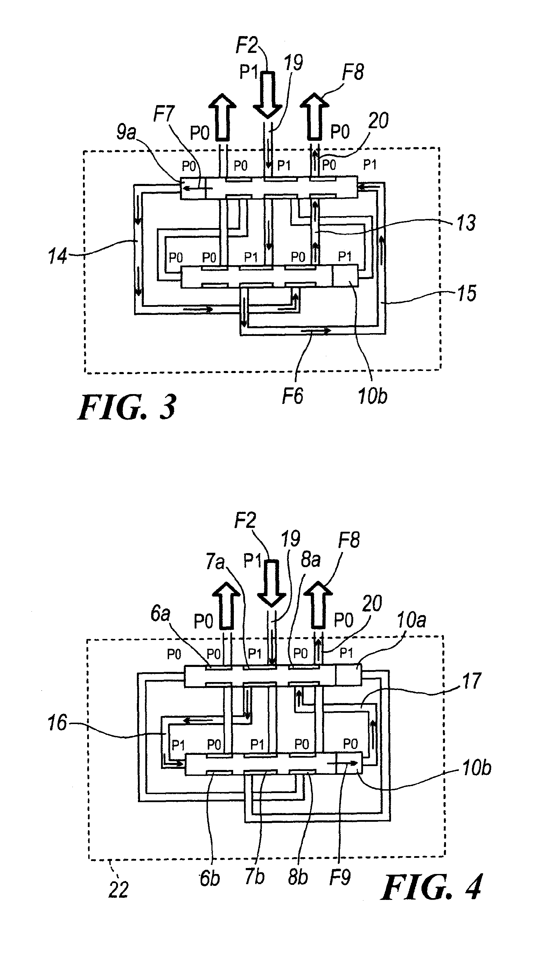

The second piston 6 then translates as indicated by the arrow F5, to dispense the fluid contained in the first pumping chamber 9b of the second cylinder 3 (as indicated by the arrow F1) through the sixth conduit 16 and the eighth conduit 18; the device then assumes the configuration shown in Figure 3.

The fluid continues to enter through the ninth conduit 19 and passes through the second distribution chamber 7a of the first cylinder 2 and the second conduit 12 to reach the distribution chamber 7b of the second cylinder 3 (which is in the piloting stage), in which the second piston 5 directs the fluid through the conduit 15 (arrow F6) and into the second pumping chamber 10a of the first cylinder, this latter translating as indicated by the arrow F7 to dispense the fluid contained in the first pumping chamber 9a, as indicated by the arrow F8 (by passing through the fourth conduit 14, the third conduit 13 and the tenth conduit 20); in this manner the device assumes the configuration of Figure 4.

The fluid, which continues to enter the device through the conduit 19 as indicated by the arrow F2, enters the second chamber 7a of the first cylinder 2 (which operates as a piloting cylinder); in this cylinder the piston directs the fluid into the sixth conduit 16 and then into the first pumping chamber 9b of the second cylinder 3 (which operates as a dosing cylinder).

The fluid entering the chamber 9 of the cylinder 3 causes the piston 5 to translate as indicated by the arrow F9, the fluid contained in it then passing through the seventh conduit 17 from which, via the third chamber 8a of the first cylinder 2, the fluid leaves the device through the tenth conduit 20 (as indicated by the arrow F8).

The device then returns to the configuration of Figure 1 and the cycle recommences.

A proximity sensor 26 is provided at each of the two ends of each cylinder 2, 3 to sense the movements of the pistons 4, 5; this enables the dispensed fluid to be measured. A single sensor associated with each cylinder could instead be provided.

It should be noted that in the time that passes between the commencement of movement of any one of the pistons and the moment in which it reaches its end-of-travel position, a sort of "neutral stage" occurs. In this respect, during this time interval, which can be varied either by structurally modifying the valve or by modifying the piston movement velocity, that piston not in movement is not piloted and remains at rest in its original position.

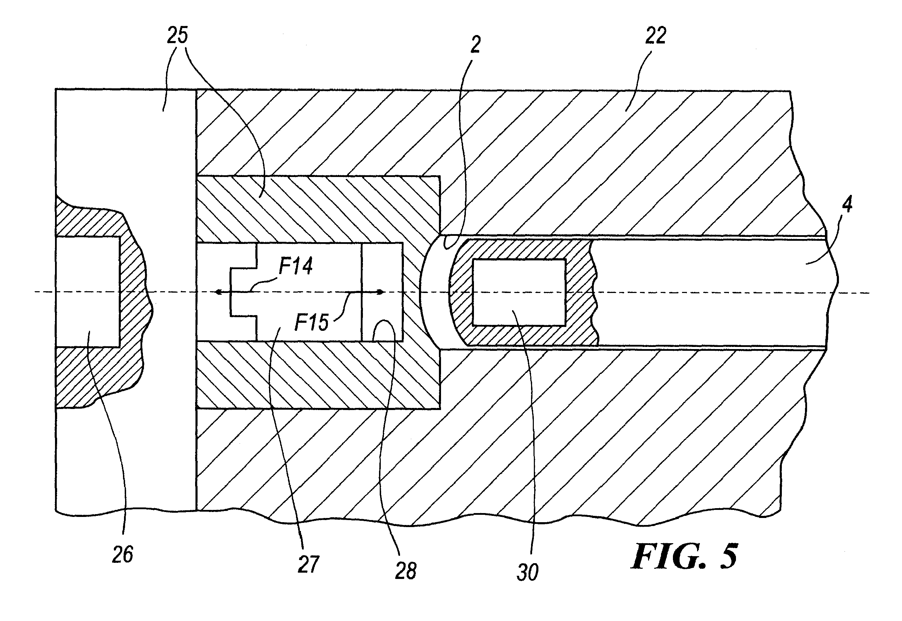

An embodiment of the device of the invention is described hereinafter with particular reference to Figure 5 which is particularly suitable for use in plants with fluids of high or very high pressure (up to and beyond 2000 bar).

For high pressure use, traditional proximity sensors are unable to sense when the pistons 4, 5 reach the ends of the chamber (because of the large wall thicknesses required to resist such pressures).

In this respect, the block 22 defining the cylinders 2, 3 is provided at its ends with closure elements 25 associated with proximity sensors comprising a sensing element 26 and a slider or element 27 slidable in a chamber 28.

The slider or element 27 is made of magnetic material and is known to oscillate because it is drawn (arrow F14) by the sensor 26 when the piston 4 is distant from the end of the cylinder 2, whereas when the piston 4 is brought to the terminal end of the cylinder 2 the slider 27 is drawn towards the piston (arrow F15).

In this manner the sensor 26 is able to sense (or count) the strokes undergone by the slider 27.
To enable the piston 4 (preferably made of ferromagnetic material but, in various applications, also of other non-ferromagnetic materials) to draw the slider 27, the pistons carry magnets 30 embedded in their ends, to cooperate with the corresponding sliders or magnetic elements 27 of the proximity sensors positioned at the cylinder ends.

In addition, to limit the negative effect on the magnetic forces caused by the large wall thickness, the pistons present convex ends, the cover elements 25 for the ends of the cylinders 2, 3 presenting recessed ends to receive the convex ends of the pistons 4, 5.

The present invention also relates to a fluid measurement/division process using the before described device.

The process consists of feeding the fluid to the piloting cylinder, in which the piloting piston defines (directing it thereto) that chamber of the dosing cylinder into which the fluid is to be fed.

The piloting piston translates to pass to the dosing stage, the dosing piston translating to dispense the fluid and pass to the piloting stage.

In passing from the piloting stage to the dosing stage the piloting cylinder passes through a neutral stage.

Modifications and variants in addition to those already stated are possible.

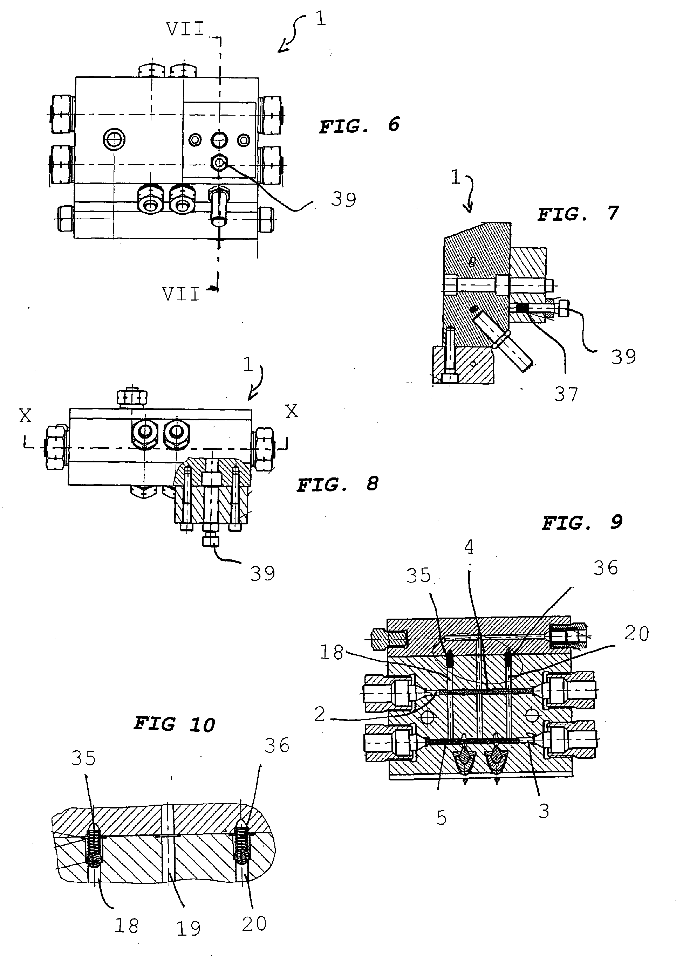

Particularly, Figures 6-10 show a different embodiment of the device of the invention having the same features as those of the already described embodiment.

In addition, the device is provided with one-way valves 35, 36 respectively provided at the entrance of the outlet communication conduits 18, 20; these valves allowing a more stable and homogeneous leaving fluid flow to be achieved.

Moreover, as shown in Figures 6, 7, 8, in order to sense or count the number of runs made by the pistons 2, 4, the device is provided with magnets 37 placed at the end of adjustable supports 39 adjacent to every cylinder 2, 3, formed for examples by screws engaged in threaded holes of the block of the device.

The count of the runs of the pistons in this case is made by measuring the perturbations of the magnetic field generated by such magnets 37.

In addition, in order to eliminate possible instability problems, the pistons 4, 5 of the device are asymmetric, so that they are formed with the chambers of one piston staggered one another, so that, in every situation, the piston acting as the piloting piston opens its chambers before the other piston, which acts as the dosing piston.

Finally, additionally or alternatively to the trick of staggering the chambers, the two pistons 4, 5 have different length compared to each other and, particularly, one is shorter than the other by about 1 millimetre.

It has been found in practice that the fluid measurement/division device and process of the invention are particularly advantageous because the device is extremely compact and lightweight.

The fluid measurement/division device and process conceived in this manner are susceptible to numerous modifications and variants, all falling within the scope of the inventive concept; moreover all details can be replaced by technically equivalent elements.
In practice the materials used and the dimensions can be chosen at will in accordance with requirements and the state of the art.

## Claims

1. A fluid measurement/division device (1) comprising a plurality of cylinders (2, 3) in which a first and a second piston (4, 5) are slidably inserted to operate alternately as a fluid dosing piston or as a piloting piston for the dosing piston, **characterised in that** said first and said second piston (4, 5) present reduced diameter regions which, together with the surface of said cylinders (2, 3), define at least three constant volume distribution chambers (6a, 7a, 8a, 6b, 7b, 8b) and two variable volume pumping chambers (9a, 10a, 9b, 10b), said device (1) comprising a plurality of conduits connecting said cylinders (2, 3) together and to the outside, to allow or prohibit hydraulic connection in relation to the position assumed by said first and by said second piston (4, 5), such that when said first piston (4) is in the dosing stage and, by translating, it dispenses fluid and passes to the piloting stage, said second piston (5) passes from the piloting stage to the dosing stage via a neutral stage.

2. A device (1) as claimed in claim 1, **characterised in that** said connection conduits comprise: a first conduit (11) to connect a first distribution chamber (6a) of the first cylinder (2) to a first distribution chamber (6b) of the second cylinder (3), a second conduit (12) to connect a second distribution chamber (7a) of the first cylinder (2) to a second distribution chamber (7b) of the second cylinder (3), a third conduit (13) to connect a third distribution chamber (8a) of the first cylinder (2) to a third distribution chamber (8b) of said second cylinder (3), a fourth conduit (14) to connect a first pumping chamber (9a) of the first cylinder (2) to a second distribution chamber (7b) or to a third distribution chamber (8b) of said second cylinder (3), a fifth conduit (15) to connect the second pumping chamber (10a) of said first cylinder (2) to the first distribution chamber (6b) or to the second distribution chamber (7b) of said second cylinder (3), a sixth conduit (16) to connect a first distribution chamber (6a) or a second distribution chamber (7a) of said first cylinder (2) to a first pumping chamber (9b) of said second cylinder (3), a seventh conduit (17) to connect said second distribution chamber (7a) or said third distribution chamber (8a) of said first cylinder (2) to said second pumping chamber (10b) of said second cylinder (3), an eighth conduit (18) to connect said first distribution chamber (6a) of said first cylinder (2) to the outside, a ninth conduit (19) to connect said second distribution chamber (7a) of said first cylinder (2) to the outside, and a tenth conduit (20) to connect said third distribution chamber (8a) of said first cylinder (2) to the outside.

3. A device (1) as claimed in one or more of the preceding claims, **characterised by** comprising a block (22) defining said first and second cylinder (2, 3) and said first, second and third connection conduit (11, 12, 13).

4. A device (1) as claimed in one or more of the preceding claims, **characterised in that** said block (22) also defines said fourth (14), said fifth (15), said sixth (16), said seventh (17), said eighth (18), said ninth (19) and said tenth (20) connection conduit.

5. A device (1) as claimed in one or more of the preceding claims, **characterised in that** said pistons (4, 5) carry magnets (30) embedded in their ends, to cooperate with corresponding magnets (27) of proximity sensors positioned at the ends of said cylinders (2, 3).

6. A device (1) as claimed in one or more of the preceding claims, **characterised in that** said pistons (4, 5) have convex ends.

7. A device (1) as claimed in one or more of the preceding claims, **characterised in that** closure elements (25) for the ends of said cylinders (2, 3) present recessed ends to receive said convex ends of said pistons (4, 5).

8. A device (1) as claimed in one or more of the preceding claims, **characterised in that** said device (1) defines a module provided with two cylinders (2, 3).

9. A device (1) as claimed in one or more of the preceding claims, **characterised by** being provided with one-way valves (35, 36) provided at the entrance of the outlet communication conduits (18, 20).

10. A device (1) as claimed in one or more of the preceding claims, **characterised by** being provided with magnets (37) to sense or count the number of runs made by the pistons (4, 5), each of said magnets (37) being placed at the end of an adjustable support (39).

11. A device (1) as claimed in one or more of the preceding claims, **characterised in that** said pistons (4, 5) are asymmetric and are formed with the chambers of one piston staggered one another, so that, in every situation, the piston acting as the piloting piston opens its chambers before the other piston.

12. A device (1) as claimed in one or more of the preceding claims, **characterised in that** the two pistons (4, 5) have different length compared with each other.

13. A fluid measurement/division process using a device (1) comprising a pair of cylinders (2, 3), in each of which a piston (4, 5) slides presenting three reduced diameter regions defining three distribution chambers (6a, 7a, 8a, 6b, 7b, 8b) and two variable volume pumping chambers (9a, 10a, 9b,10b) connected together by a plurality of conduits, **characterised in that** it feeds the fluid to a piloting cylinder in which the piloting piston defines that chamber of the dosing cylinder into which the fluid is to be fed, the piloting piston translating to pass to the dosing stage, the dosing piston translating to dispense the fluid and pass to the piloting stage, in its passage from the piloting stage to the dosing stage said piloting cylinder passing through a neutral stage.
